# EUROPEAN PATENT APPLICATION

(11) **EP 2 214 411 A2**
(43) Date of publication of application: **04.08.2010**
(21) Application number: 10159683.1
(22) Date of filing: 26.10.2004
(51) Int. Cl.: H04N 7/16

(54) **Datacasting**

(30) Priority: 28.10.2003 GB 0325143
(62) Divisional of application: 04770323.6
(71) Applicant: Nokia Corporation, 02150 Espoo (FI)
(72) Inventor: Vermola, Larri, 20500 Turku (FI); Salo, Juha, 20660 Littoinen (FI); Naumi, Tero, 31500 Koski (FI); Vainio, Miia, 02340 Espoo (FI)
(74) Representative: Swindell & Pearson Limited

(57) **Abstract**

A method of datacasting, the method comprising: providing electronic service guide data relating to one or more services which is specific to a datacast service system and selectively provided by a datacast operator and providing one or more data files including information for locating a main page of the datacast operator.

## Description

### Field of the Invention

The present invention relates to datacasting, particularly, though not exclusively to internet protocol datacasting.

### Background Art

In Internet Protocol datacasting (IPDC), IP data is transmitted to mobile and fixed receivers using a digital video broadcasting (DVB) network. IPDC can be used to deliver data services, such as a news or software updates, at rates over 11 Mbits⁻¹.

It is possible for more than one datacast operator to provide datacast services in the same area using one or more broadcast networks. Furthermore, a user having a mobile receiver can move from one area to another, each area being served by different datacast operators. Where a user moves into a new area, it is likely they will have no prior knowledge of available services or information regarding datacast service operators.

In either case, but particularly in the case of a user having a mobile receiver, it is desirable that datacast operators are easily identifiable and that information about the services they provide is readily available.

### Summary of the Invention

According to a first aspect of the present invention there is provided a method of datacasting, the method comprising providing electronic service guide (ESG) data relating to one or more services and providing supplementary data selectively provided by a datacast operator.

The method may comprise providing a main page including at least some of said supplementary data. The method may comprise providing a data file including information for locating said main page. The data file may include information for locating at least one service main page.

According to a second aspect of the present invention there is provided a computer program including instructions which when executed by a data processing apparatus causes said apparatus to perform the method.

According to a third aspect of the present invention there is provided a system for datacasting comprising providing electronic service guide (ESG) data relating to one or more services and providing supplementary data selectively provided by a datacast service operator.

According to a fourth aspect of the present invention there is provided apparatus for datacasting comprising means for providing electronic service guide (ESG) data relating to one or more services and means for providing supplementary data selectively provided by a datacast service operator.

According to a fifth aspect of the present invention there is provided a method of operating a terminal for receiving datacast services, the method comprising receiving electronic service guide (ESG) data relating to one or more services and receiving supplementary data provided by a datacast operator.

The method may comprise receiving at least some of said supplementary data in preference to receiving said ESG data. The method may comprise using said supplementary data to locate said ESG data. The method may comprise receiving a main page including at least some of said supplementary data. The method may comprise providing a data file including information for locating said main page. The data file may include information for locating at least one service main page. The method may further comprise receiving datacast data via a first network, receiving data from a second, different network and displaying at least some of said datacast data and at least some of said data. The method may comprise displaying a list of services and selecting one or more services. The method may comprise intermittently switching on a receiver to receive a time-sliced burst of data and switching off said receiver.

According to a sixth aspect of the present invention there is provided a computer program including instructions which when executed by a data processing apparatus causes said apparatus to perform the method.

According to a seventh aspect of the present invention there is provided a system for operating a terminal for receiving datacast services, the system comprising receiving electronic service guide (ESG) data relating to one or more services and receiving supplementary data provided by a datacast operator.

According to an eighth aspect of the present invention there is provided a terminal for receiving datacast services comprising means for receiving electronic service guide (ESG) data relating to one or more services and means for receiving supplementary data provided by a datacast operator.

The terminal may comprise means for receiving datacast transmissions and means for communicating with public land mobile network.

### Brief Description of the Drawings

Embodiments of the present invention will now be described, by way of example, with reference to the accompanying drawings in which:
Figure 1 is a schematic diagram of an exemplary communications system;
Figure 2 is a more detailed schematic diagram of aspects of the system shown in Figure 1;
Figure 3 is block diagram of an embodiment of a datacast service system according to the present invention;
Figure 4 is a schematic diagram of a main page carousel including a datacast operator main page in accordance with one embodiment of the present invention;
Figure 5 is a schematic diagram of a hierarchy file carousel in accordance with one embodiment of the present invention;
Figure 6 is a schematic diagram of ESG data including service description;
Figure 7 is a schematic diagram of a hierarchy file in accordance with one embodiment of the present invention;
Figure 8 illustrates a main page directory structure in accordance with one embodiment of the present invention;
Figure 9 illustrates a protocol stack used for transmission of data in the datacast service system shown in Figure 3;
Figure 10 illustrates a transport stream output from the datacast service system shown in Figure 3;
Figure 11 illustrates an example of a network interface table and an IP/MAC Notification table;
Figure 12 is a flow diagram of a process performed by datacast service system shown in Figure 3 in one embodiment of the invention;
Figure 13 is a schematic diagram of a mobile terminal in one embodiment of the invention;
Figure 14 is a flow diagram of a first process performed by the mobile communications device shown in Figure 13 in one embodiment of the invention; Figure 15 is a flow diagram of a second process performed by the mobile communications device shown in Figure 13 in one embodiment of the invention; Figure 16 shows an old hierarchy file and a new hierarchy file;
Figure 17 illustrates a first view of datacast operator main page in accordance with one embodiment of the present invention;
Figure 18 illustrates a second view of datacast operator main page in accordance with one embodiment of the present invention;
Figure 19 illustrates a viewer; and
Figure 20 is a flow diagram of a third process performed by the mobile communications device shown in Figure 13 in one embodiment of the invention.

### Detailed Description of the Invention

### Commnnications system 1

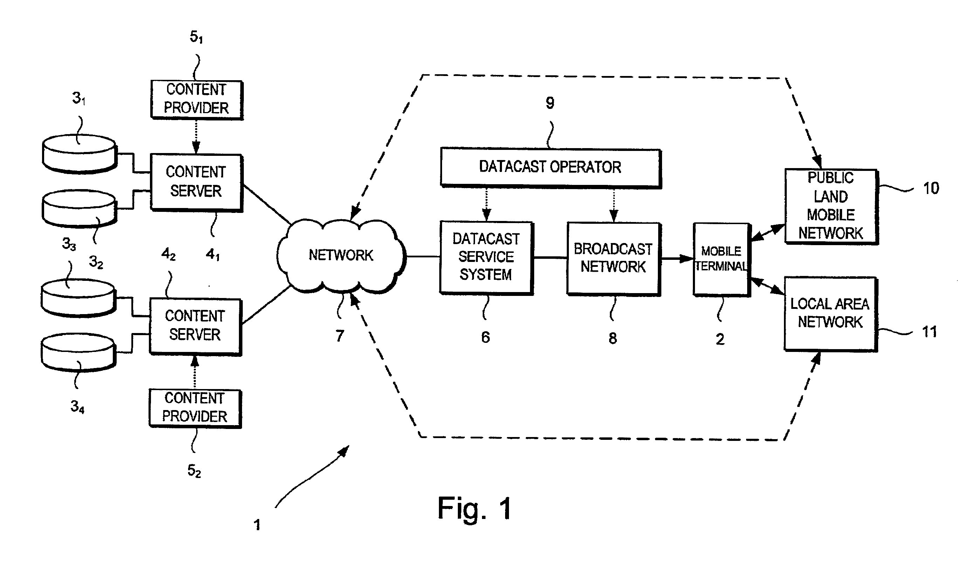

Referring to Figure 1, a communications system 1 for delivering content to a mobile terminal 2 is shown. The communications system 1 includes sources 3₁, 3₂, 3₃, 3₄ of content, for example in the form of video, audio and data files, and content servers 4₁, 4₂ for retrieving content and, optionally, re-formatting, storing, aggregating and/or scheduling the content. The content servers 4₁, 4₂ may be controlled by respective entities 5₁, 5₂ referred to as "content providers". However, the content servers 4₁, 4₂ may be controlled by the same entity.

The communications system 1 further includes a datacast service system 6. The datacast service system 6 receives content from the content servers 4₁, 4₂ via a network 7, such as the Internet, and performs a number of functions including receiving content, providing service sets and service bundles, arranging service sets data in carousels, generating service information (SI) data, encapsulating and multiplexing data. In one embodiment of the invention a service set can be used for combining same kind of services of one service or content provider together. One service may belong to a number of service sets. In another embodiment of the invention a number of services are bundled into a service bundle, which may be a sellable entity. The datacast service system 6 may also re-format, store, aggregate and/or schedule content

The communications system 1 also includes a broadcast network 8, for example in the form of a terrestrial digital video broadcasting (DVB-T) network, for providing a transmission channel from the datacast service system 6 to the mobile terminal 2. Other broadcast networks may be used including other types of DVB networks, such as a cable DVB network or satellite DVB network, a Digital Audio Broadcasting (DAB) network or an Advance Television System Committee ATSC) network or a terrestrial Integrated Services Digital Broadcasting-Terrestrial (ISDB-T) network.

The datacast service system 6 and broadcast network 8 are controlled by an entity 9 referred to as a "datacast operator". However, the broadcast network 8 may also be used for other purposes, such as transmission of digital television, and may be controlled by another, different operator (not shown). Under those circumstances, the datacast operator 9 controls the datacast service system 6 but not the broadcast network 8.

A public land mobile network (PLMN) 10, for example in the form of a GSM system, may provide a return channel from the mobile terminal 2 to the Internet 7. Other PLMN networks may be used, such as other types of second-generation (2G) network such as digital advanced mobile phone system (D-AMPS) network or Personal Digital Communication System (PDC) network, a "two-and-a-half" generation network, such as General Packet Radio Service (GPRS) network and enhanced data rates for GSM evolution (EDGE), or a third-generation network (3G), such as Universal Mobile Telephone System (UMTS) network based on wideband code division multiple access (W-CDMA), or a time division synchronous code division multiple access (TD-SCDMA) network.

A local area network (LAN) 11, for example using IEEE 802.11x, may also be provided for obtaining data from local sources (not shown) or from the Internet 7. Other LANs or personal area networks (PANs) may be used such as Bluetooth™.

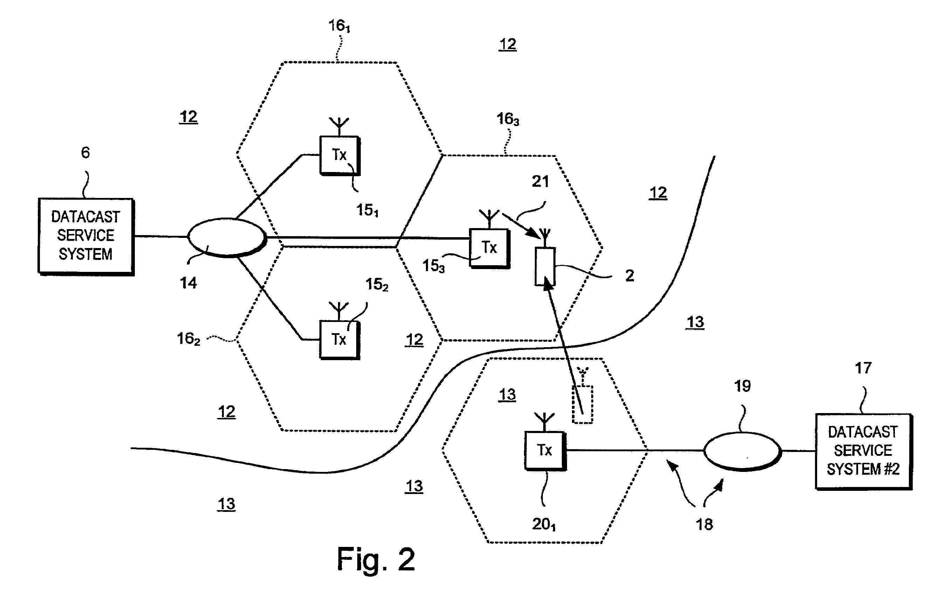

Referring to Figure 2, first and second geographical regions 12, 13 are shown. One or both of the regions 12, 13 may be a country, a part of a country, city or town or a district of a city or town. For example, the first region 12 may be a city, while the second region 13 may be a countryside surrounding the city.

The first region 12 is served by the first datacast service system 6 via the broadcast network 8. The broadcast network 8 comprises a core network 14 and one or more transmitters 15₁, 15₂, 15₃ which transmit in respective cells 16₁, 16₂, 16₃, Gap filler transmitters (not shown) may also be provided. It will be appreciated that alternative configurations of the broadcast network 8 may be used. For example, the core network need not be provided.

The broadcast network 8 is in this example arranged to transmit as a single frequency network (SFN) using 16 Quadrature Amplitude Modulation (QAM) at frequency lying in the range 470 to 862 MHz.

The first region 12 is also served by PLMN 10 (Figure 1) in a conventional manner.

The second region 13 is served by second datacast service system 17 via another broadcast network 18 comprising a core network 19 and one or more transmitters 20₁. Alternative configurations may be used as with the first datacast service system,

A user is initially located in the second region 13 and moves to the first region 12, taking their mobile terminal 2 with them. In the first region 12, the mobile terminal 2 receives a signal 21 transmitted from a transmitter 15₃ carrying a number of services.

As explained earlier, it is desirable that the datacast service system 6 is easily identifiable and that information about services is readily available. Therefore, the datacast service system 6 provides its own information service which supplements an electronic service guide (ESG). The information service is specific to the area served by the datacast service system 6. Thus, when the mobile terminal 2 moves to the first region 12, local information can be provided quickly.

### Datacast service system 6

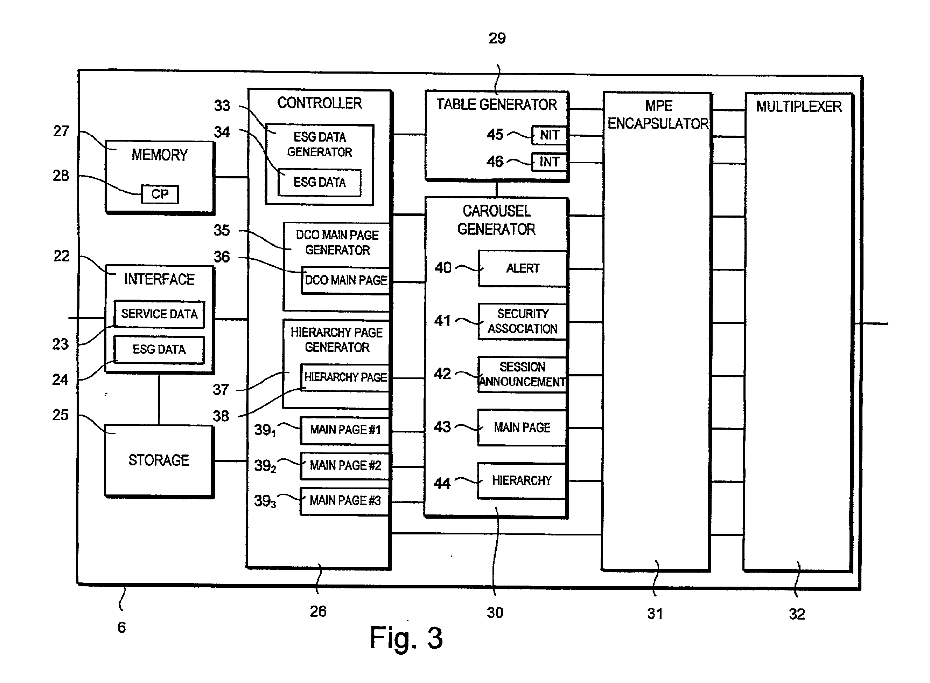

Referring to Figure 3, a schematic diagram of an embodiment of a datacast service system 6 according to the present invention is shown.

In this embodiment of the invention, the datacast service system 6 comprises an interface 22 for receiving service data 23 and, optionally, relevant electronic service guide (ESG) data 24, both in the form of IP data, from content servers 4₁, 4₂ (Figure 1) and storage 25 for optionally storing at least part of the service data 23 and ESG data 24. The system 6 also comprises a controller 26, memory 27 storing a computer program 28 for controlling the datacast system 6 shown in Figure 3, a service information (SI) table generator 29, a carousel generator 30, a multiprotocol encapsulation (MPE) encapsulator 31 and a multiplexer 32.

The controller 26 includes an ESG data generator 33 for generating ESG data 34, which together with ESG data 24, is used for describing the scheduling and timing of content. The controller 26 also includes a main page generator 35 for producing a main page 36 for the datacast operator, herein referred to as the "DCO main page". The controller 26 also includes a hierarchy page generator 37 for generating a hierarchy page 38 which will be described in more detail later. The controller 26 may provide main pages 39₁, 39₂, 39₃ for a number of services. The service main pages 39₁, 39₂, 39₃ may be provided by the content servers 4₁, 4₂ (Figure 1). However, the controller 26 may modify the service main pages 39₁, 39₂, 39₃ or generate the service main pages 39₁, 39₂, 39₃ from the service data 22.

The DCO main page 36 is selectively provided by the datacast operator 9 (Figure 3) and may include data for identifying the datacast operator, data for advertising and/or data for informing the user, for example announcing new, upcoming or updated services, informing the user of popular services or providing recommendations.

The carousel generator 30 receives data relating to the services such as service data 22 and ESG data 24, 34. It may generate a number of carousels 40, 41, 42, 43, 44 including an alert carousel 40 for notifying the mobile terminal 2 (Figure 1) e.g. of changes in service, a security association carousel 41 for encryption keys for encrypted content , a session announcement carousel 42 for announcing sessions, a main page carousel 43 for providing main pages for the datacast operator and the services and a hierarchy carousel 44 for providing data relating to the hierarchy of available services. Carousels 40, 41, 42, 43, 44 repeatedly transmit data usually in a cyclically manner.

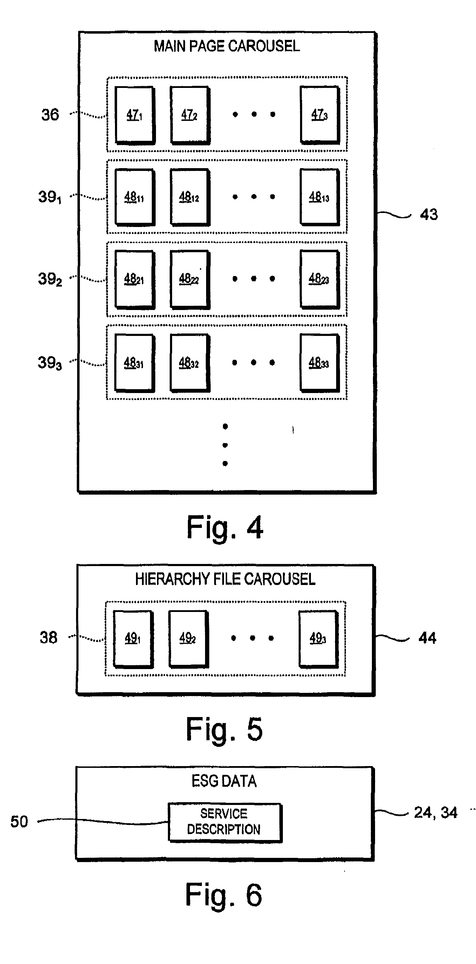

Referring to Figure 4, the main page carousel 43 may comprise the DCO main page 36 in the form of one or more files 47₁, 47₂, 47₃ and service main pages 39₁, 39₂, 39₃ each in the form of one or more files 48₁₁, 48₁₂, 48₁₃, 48₂₁, 48₂₂, 48₂₃, 48₃₁, 48₃₂, 48₃₃, The number of files 47₁, 47₂, 47₃ comprised in the DCO main page 36 need not be the same as the number of files 48₁₁, 48₁₂, 48₁₃, 48₂₁, 48₂₂, 48₂₃, 48₃₁, 48₃₂, 48₃₃ comprised in any other service main page 39₁, 39₂, 39₃. Furthermore, the number of files 48₁₁, 48₁₂, 48₁₃ comprised in any service main page, for example the first service main page 39₁, need not be the same as the number of files 48₂₁, 48₂₂, 48₂₃ comprised in another service main page, for instance the second service main page 39₂.

The files 47₁, 47₂, 47₃, 48₁₁, 48₁₂, 48₁₃, 48₂₁, 48₂₂, 48₂₃, 48₃₁, 48₃₂, 48₃₃ are in one embodiment of the invention in the form of hypertext mark-up language (HTML) protocol files. However, other file formats may be used, such as extensible mark-up language (XML) or session description protocol (SDP). Reference is made to "Session Description Protocol" by M. Handley & V. Jacobson, RFC 2327, IETF, April 1998.

Referring to Figure 5, a hierarchy file carousel 44 comprises a hierarchy file 38 in the form of one or more sub-files 49₁, 49₂, 49₃. In one embodiment of the invention the hierarchy file 38 need not be configured or transmitted in the form of a carousel 38.

Referring to Figure 6, the ESG data 24, 34 includes service description data 50 in one embodiment of the invention.

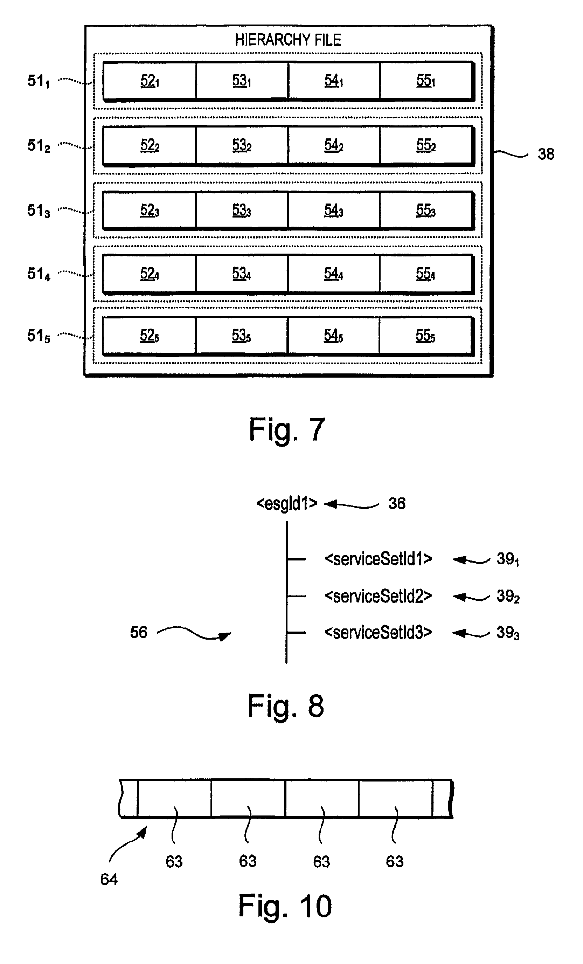

Referring to Figure 7, the hierarchy file 38 comprises sets 51₁, 51₂, 51₃, 51₄, 51₅ of carousel information. Each carousel 40, 41, 42, 43, 44 (Figure 3) has a respective set 51₁, 51₂, 51₃, 51₄, 51₅ of carousel information comprising an identifier 52₁, 52₂, 52₃, 52₄, 52₅ for identifying the carousel type, a list 53₁, 53₂, 53₃, 53₄, 53₅ of IP addresses and port numbers for sets of pages within a carousel, an optional list 54₁, 54₂, 54₃, 54₄, 54₅ of times for indicating when carousel information will expire and optional list 55₁, 55₂, 55₃, 55₄, 55₅ of times for indicating frequency of updates.

The session, main page and hierarchy carousels 42, 43, 44 include respective lists 54₂, 54₄, 54₅ of expiry times. The main page and hierarchy carousels 43, 44 may include respective lists 55₄, 55₅ of update times.

Thus, the main page carousel 43 (Figure 3) has a set 51₄ of carousel information including an identifier 52₄ for indicating that the carousel is the main page carousel, a list 53₄ of IP addresses and port numbers for the DCO main page 36 (Figure 4) and the service main pages 39₁, 39₂, 39₃ (Figure 4), a list 54₄ of expiry times and a list 55₄ of update intervals.

The IP addresses in lists 53₁, 53₂, 53₃, 53₄, 53₅ conform in one embodiment of the invention to IPv6 protocols and reference is made to "Internet Protocol, Version 6 (IPv6) Specification", by S. Deering and R. Hindern, RFC 2460, IETF, December 1998 and other related IPv6 RFCs. However, other IP protocols may be used.

The expiry times in lists 54₁, 54₂, 54₃, 54₄, 54₅ conform in one embodiment of the invention to Network Time Protocol (NTP) and reference is made to "Network Time Protocol (version 3) Specification, Implementation" by D. Mills, RFC 1305, IETF, March 1992. However, other times may be used. The expiry times in lists 54₁, 54₂, 54₃, 54₄, 54₅ may differ from one another.

The update intervals 55₁, 55₂, 55₃, 55₄, 55₅ may be expressed in seconds. However, other units of time such as milliseconds may be used in various embodiments of the invention.

Referring to Figure 8, an exemplary directory structure 56 of the main pages 36, 39₁, 39₂, 39₃ is shown. In this example the DCO main page 36 includes the service main pages 39₁, 39₂, 39₃.

As will be explained in more detail later, in one embodiment of the invention the IP address of the hierarchy file 38 is signalled through SI, in particular through the NIT 45 (Figure 3) and the INT 46 (Figure 3).

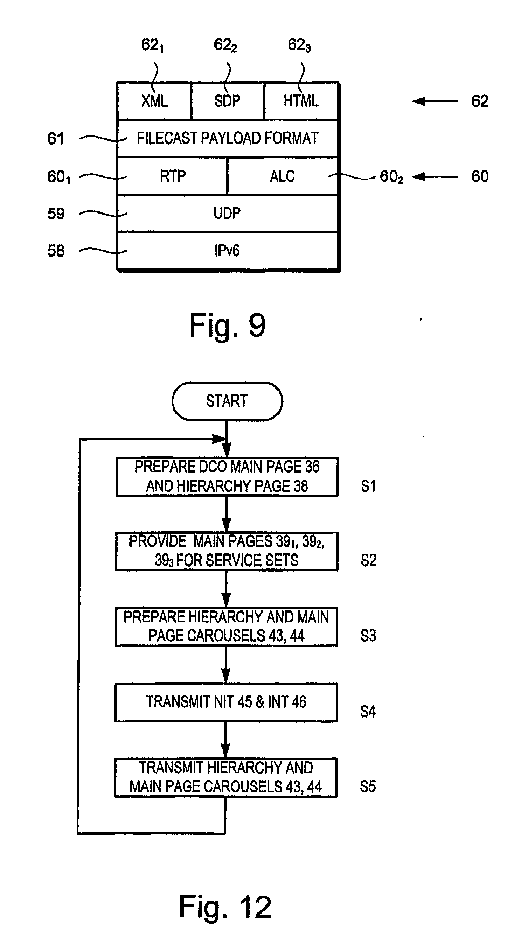

Referring to Figure 9, in one embodiment of the invention the datacast service system 6 transmits data in accordance with a number of transport protocols and a protocol stack 57 is shown.

In one embodiment of the invention in the network layer (layer 3), IPv6 protocols 58 are used and reference is made to "Internet Protocol, Version 6 (IPv6) Specification" *ibid*. IP security (IPsec) is not necessarily used when transmitting main page files 47₁, 47₂, 47₃, 48₁₁, 48₁₂, 48₁₃, 48₂₁, 48₂₂, 48₂₃, 48₃₁, 48₃₂, 48₃₃. Further in one embodiment of the invention in the transport layer (layer 4), Usergram Data Protocol (UDP) 59 is used and reference is made to "User Datagram Protocol", by J. Postel, RFC 768, IETF, August 1980.

In one embodiment of the invention Real-time Transport Protocol (RTP) 60₁ may be used to transport files. However, Asynchronous Layered Coding (ALC) protocol 60₂ may be used in other embodiments of the invention. Reference is made to "A Transport Protocol for Real-Time Applications" by H. Schulzrinne *et al.,* RFC 1889, IETF, January 1996 and "Asynchronous Layered Coding Protocol" by M. Luby *et al*., RFC 3450, IETF, December 2002.

On the RTP/ALC layer 60, a filecast payload format may be used which specifies, in detail, the use of RTP/ALC protocols.

A number of different file formats may be used. For example, XML 62₁ may be used for hierarchy files 49₁, 49₂, 49₃ (Figure 5), security association files (not shown) and session announcement files (not shown). SDP 62₂ may be used for technical session information that is not directly shown to the user.In various embodiments of the invention HTML 62₃ may be used for main page files 47₁, 47₂, 47₃, 48₁₁, 48₁₂, 48₁₃, 48₂₁, 48₂₂, 48₂₃, 48₃₁, 48₃₂, 48₃₃.

If more than one language is supported, then the main pages can be sent in files for different languages. The language used is indicated e.g. using language codes. Reference is made to "Tags for the Identification of Languages" by H. Alvestrand, RFC 1766, IETF, March 1995.

Referring again to Figure 3, an MPE encapsulator 31 encapsulates data, such as data from carousels 40, 41, 42, 43, 44, into sections (not shown) compliant with DSM-CC section format for private data as specified Section 7 "Multiprotocol Encapsulation" in "Digital Video Broadcasting (DVB); DVB specification for data broadcasting", ETSI EN 301 192, V1.3.1 (2003).

Data for a given service may be time-sliced.

However, some data may not be so encapsulated. For example, the NIT 45 may be segmented into network information sections, for example as specified in Section 5 "Service Information (SI) tables" in "Digital Video Broadcasting (DVB); Specification for Service Information (SI) in DVB systems", ETSI EN 300 468, V1.5.1 (2003).

Referring also to Figure 10, the multiplexer 32 places the sections (not shown) into MPEG-2 transport stream (TS) packets 63, according to International Organisation for Standards/ International Electrotechnical Commission (ISO/IEC) Standard 13818-1 "Information technology - Generic coding of moving pictures and associated audio information: Systems" and outputs a transport stream 64. The transport stream 64 is provided to the broadcast network 8 (Figure 1) in which it may be multiplexed with other streams (not shown), then modulated and broadcast.

As mentioned earlier, the IP address of the hierarchy file 38 may be signalled through SI, in particular through the NIT 45 (Figure 3) and the INT 46 (Figure 3).

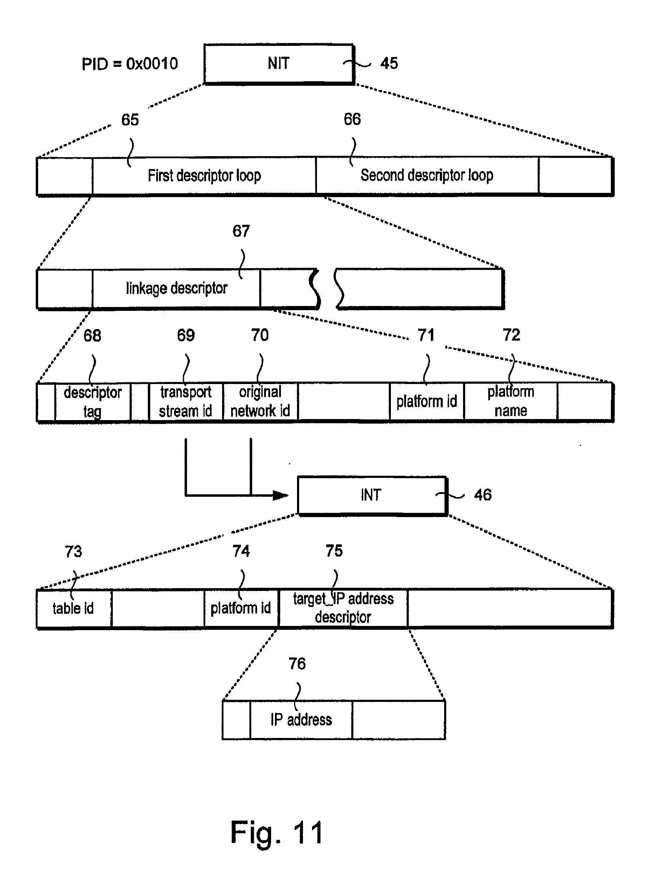

Referring to an example illustrated in Figure 11, the NIT 45 includes first and second descriptor loops 65, 66 in which a plurality of descriptors (not shown) for, *inter alia*, specifying data values and identifying other parts of the transport stream, may be inserted.

A linkage descriptor 67 can be used to point to other parts of the transport stream and thus obtain further data or access a service. To identify itself as such, the linkage descriptor 67 includes a descriptor tag 68 containing a predetermined value, e.g. 0x0B. The linkage descriptor 67 also includes a transport stream id 69 and an original network id 70 to identify uniquely a transport stream, in this case carrying the INT 46.

The transport stream 54 (Figure 10) may carry a plurality of sets of IP streams, a set of IP streams being known as an "IP platform". Each IP platform can be identified by a platform id 71 and a platform name 72 which describes the platform and can be used by the mobile terminal 2 to select a platform.

Reference is made to Section 7.4 "Network (SI) signalling" in "Digital Video Broadcasting (DVB); DVB specification for data broadcasting", ETSI EN 301 192 *ibid.* and in Section 6.2.17 "Linkage descriptor" in "Digital Video Broadcasting (DVB); Specification for Service Information (SI) in DVB systems" ETSI EN 300 468 *ibid*..

To identify itself as such, the INT 46 includes a table id 73 containing a predetermined value, such as 0x4C. The INT 46 includes a platform id 74 and may include one or more target IP address descriptors 75, each including a target IP address 76. The IP address on which the hierarchy file 38 (Figure 6) is transmitted is specified in target IP address 70.

Referring to Figure 12, a process performed by the datacast service system 6 in one embodiment of the invention is shown in the form of a flow diagram.

Referring also to Figure 3, in one exemplary embodiment of the invention the DCO main page generator 35 generates a DCO main page 36 and the hierarchy page generator 37 generates a hierarchy page 38 (step S1). This may be done periodically, for example every 10 or 100 seconds. Additionally or alternatively, the DCO main page generator 35 may generate a DCO main page 36 when any one of a number of predefined events occurs, such as a change in service, or any one of a number of predefined conditions, such as when a number of consumers exceeds a given number, are satisfied. Additionally or alternatively, the DCO main page generator 35 may generate a DCO main page 36 as-and-when directed to do so by the DCO operator 9.

The controller 26 also may provide service main pages 39₁, 39₂, 39₃ (step S2).

The carousel generator 30 receives the DCO main page 32 (Figure 4), the service main pages 33₁, 33₂, 33₃ and the hierarchy page 38 and generates the main page carousel 43 and the hierarchy file carousel 44 (step S3).

Generation of the main page carousel 43 and the hierarchy file carousel 44 includes assigning respective IP addresses and port numbers to the DCO main page 36 (Figure 4) and the service main pages 39₁, 39₂, 39₃ (Figure 4), and to the hierarchy file 38 (Figure 6).

The IP address and port numbers assigned to the DCO main page 36 (Figure 4) and the service main pages 39₁, 39₂, 39₃ (Figure 4), as well as IP address and port numbers assigned to other carousels, are included in the hierarchy file 38 (Figure 6). The IP address and port number assigned to the hierarchy file 38 (Figure 6) are supplied to the table generator 29 for inclusion in the INT 46.

The carousels 40, 41, 42, 43, 44 are local, i.e. specific to the network area. In other words, each network area has its own hierarchy, main page, security association, session announcement and alert carousels. Thus, the hierarchy file 38 (Figure 6) has a different IP address in each network area.

The IP addresses may be assigned on an ad-hoc basis. Alternatively, the IP addresses may be pre-assigned.

The NIT 45 and INT 46 are prepared and cyclically transmitted (step S4). The main page and hierarchy file carousels 43, 44 are transmitted (step S5).

### Mobile terminal 2

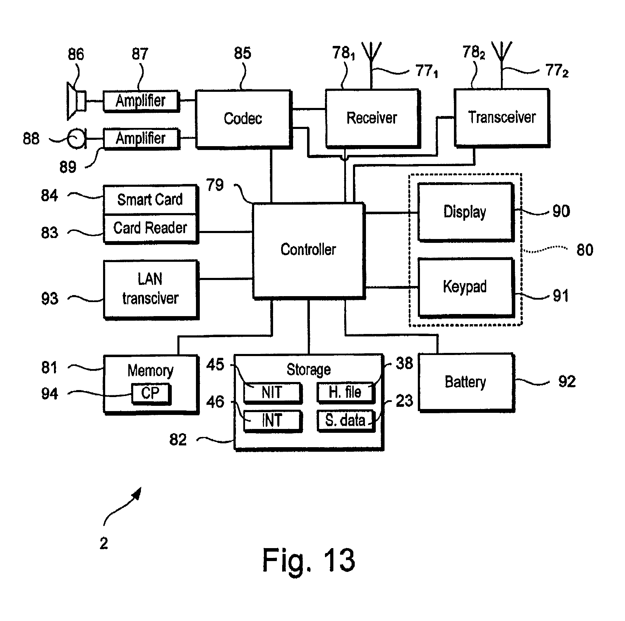

Referring to Figure 13, the mobile terminal 2 in one embodiment of the invention is in the form of a mobile telephone handset with a multimedia capability.

The mobile terminal 2 includes first and second antennae 77₁, 77₂, a receiver 78₁ and a transceiver 78₂. In this example, the first antenna 77₁ and receiver 78₁ are used to receive signals from the broadcast network 8 (Figure 1). The second antenna 77₂ and transceiver 78₂ are used to transmit and receive signals to and from the PLMN 10 (Figure 1). The receiver and transceiver 78₁, 78₂ each include respective r.f. signal processing circuits (not shown) for amplifying and demodulating received signals and respective processors (not shown) for channel decoding and demultiplexing.

The mobile terminal 2 also includes a controller 79, a user interface 80, memory 81, storage 82 a smart card reader 83, smart card 84 received in the smart card reader 83, a coder/decoder (codec) 85, a speaker 86 with corresponding amplifier 87 and a microphone 88 with a corresponding pre-amplifier 89.

The user interface 80 comprises a display 90 and a keypad 91. The display 90 is adapted for displaying images and video by, for instance, being larger and/or having greater resolution than a display of conventional mobile telephone and being capable of colour images. The mobile terminal 2 also includes a battery 92.

A transceiver 93 may optionally be provided for transmitting and receiving signals to and from the LAN 11 (Figure 1). The transceiver 93 may be a wireless card compliant to IEEE 802.11x or Bluetooth™ specifications.

The controller 79 manages operation of the mobile terminal 2 under the direction of computer software 94 stored in memory 81. For example, the controller 79 provides an output for the display 90 and receives inputs from the keypad 91.

The mobile terminal 2 may be modified by providing a single receiver adapted to receive signals from the broadcast network 8 (Figure 1) and the PLMN 10 (Figure 1) and a transmitter adapted to transmit signals to the PLMN 10 (Figure 1). Alternatively, a single transceiver for both communications networks 8, 10 may be provided.

When the mobile terminal 2 is switched on and/or if the mobile terminal 2 moves from one region 13 (Figure 13) to another region 12 (Figure 2) served by different datacast operators 6, 17 (Figure 2) or served by the same datacast operator and having at least partly different services available, then the mobile terminal 2 may not have up-to-date -or even any- electronic service guide (ESG) information.

The mobile terminal 2 acquires ESG data 24, 25 (Figure 3), which includes NIT 45, INT 46, main pages 47₁, 47₂, 47₃, 48₁₁, 48₁₂, 48₁₃, 48₂₁, 48₂₂, 48₃₃, 48₃₁, 48₃₂, 48₃₃ (Figure 4) and service description data 50 (Figure 6) using information included in the hierarchy file 38 (Figure 5) and the DCO main page 36 (Figure 3). More detailed information may also be acquired, on request, using information included in the ESG data 24, 25 (Figure 3).

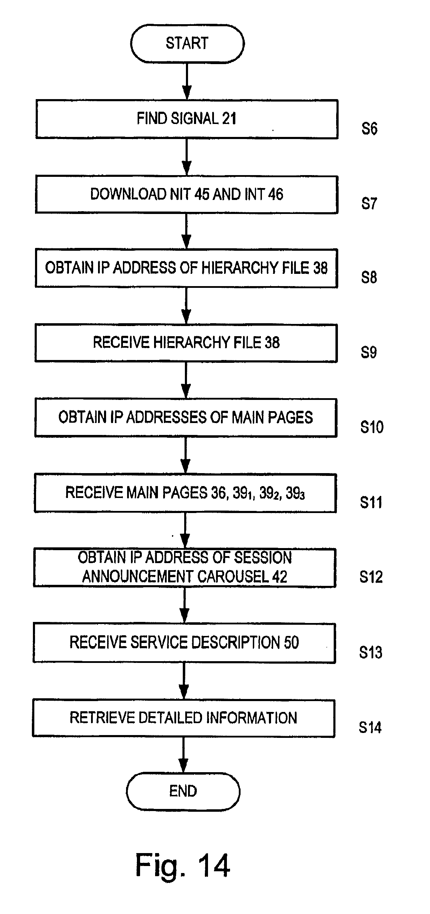

Referring to Figures 13 and 14 illustrating one embodiment of the invention, a process performed by the mobile terminal 2, for example when it is switched or moves from one region 13 (Figure 13) to another region 12 (Figure 2), is shown in the form of a flow diagram.

The controller 79 instructs the receiver 78₁ to locate a network, in this case the broadcast network 8 (Figure 1) (step S6). This may be achieved by scanning a part of the radio frequency spectrum until signal 21 (Figure 2) is found. Alternatively, the controller 79 may select one or one or more pre-defined or user inputted network frequencies. Then again, the user may instruct the controller 79 to find a given network.

In this exemplary embodiment of the invention the controller 79 locates, downloads, parses and stores the NIT 45, then locates, downloads, parses and stores the INT 46 (step S7). The controller 79 obtains the IP address and port number of the hierarchy file 38 (step S8). This may comprise determining whether any IP address within the hierarchy file 38 falls within a predefined ESG IP address range and returning any address which falls within that range. The controller 79 joins the address, downloads, parses and stores the hierarchy file 38 in storage 82 (step S9).

From the hierarchy file 38, the controller 79 can obtain respective IP addresses and port numbers for the carousels 40, 41, 42, 43, 44.

In particular, the controller 79 may obtain the IP address and port number for the main pages 36, 39₁, 39₂, 39₃ (step S10),may join the addresses and download one or more of the main pages 36, 39₁, 39₂, 39₃ (step S11). Furthermore, the controller 79 can obtain the IP address and port number for session announcement carousel 42 (step S12), join the address and download the session description data 50 (step S13). The session description data 50 may include universal resource locators (URLs) for obtaining further, more detailed information (not shown). At the request of the user, the controller 79 may retrieve more detailed information (not shown) via the PLMN 10 (Figure 1) or LAN 11 (Figure 1).

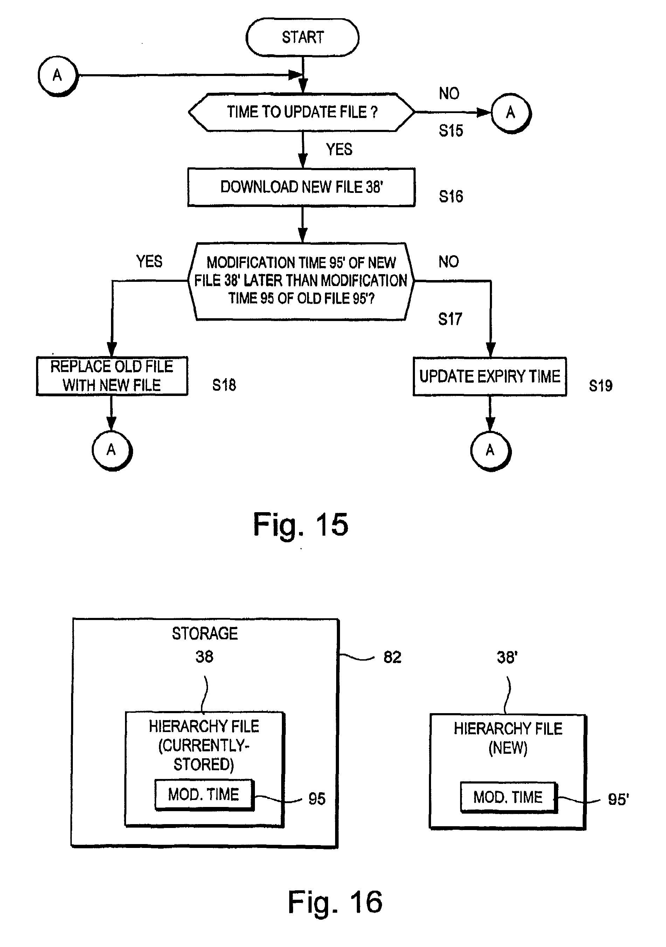

Referring to Figures 13, 15 and 16, a process performed by the mobile terminal 2 in one embodiment of the invention, for example once it obtained ESG information, is shown in the form of a flow diagram.

The controller 79 may only listen to announcements, such as hierarchy file 38, when it is time for an update.

Based upon the expiry time 54₅ (Figure 7), the controller 79 determines whether it is time to update the hierarchy file 38 (step S15). If it is time for an update, the controller 79 downloads a new hierarchy file 38' (step S16). The currently stored hierarchy file 38 and the new hierarchy file 38' each have values 95, 95' indicating when they were last modified.

The controller 79 compares the modification time 95' of the new hierarchy file 38' with the modification time 95 of the currently-stored hierarchy file 38 (step S17). If the modification time 95' of the new hierarchy file 38' is later than the modification time 95 of the currently-stored hierarchy file 38, in other words the new hierarchy file 38' is indeed newer than the currently-stored hierarchy file 38, then the new hierarchy file 38' is stored in storage 82 (step S18). If not, the expiry time 54₅ (Figure 7) is simply updated (step S19).

The controller 79 may also check expiry times 54₄ for the main page carousel 43. However, the update interval 55₄ (Figure 7) for the main page carousel 43 may be shorter than the update interval 55₅ (Figure 7) for the hierarchy file carousel 44. Therefore, the controller 79 may calculate expected expiry times for the main page carousel 43 using the update interval 55₄, thereby avoiding the need to check the hierarchy file 38.

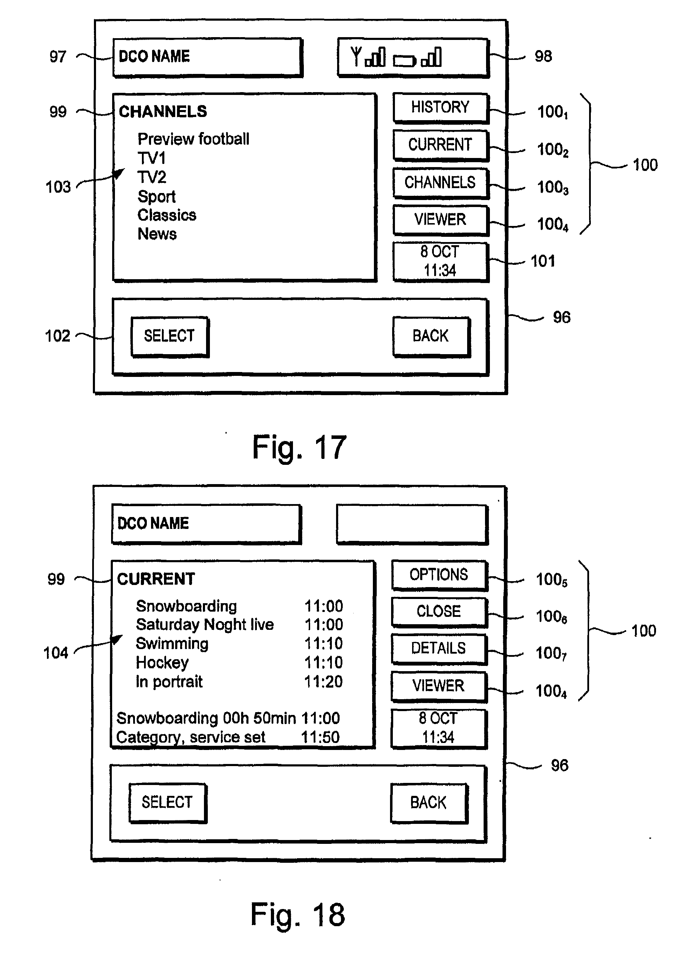

Referring to Figure 17, a first view of a DCO main page display 96 as displayed by the mobile terminal 2 in display 90 is shown in one embodiment of the invention.

The DCO main page display 96 is the first page which is presented to the user when the datacast service system 6 (Figure 1) is accessed and can be used to view the ESG. The DCO main page display 96 can be quickly presented because the DCO main page 36 (Figure 3) is used as a default starting point and presents the most relevant information to the user.

The DCO main page display 96 may include a number of fields including an operator identity field 97, terminal status area 98, an active area 99, selection buttons 100, time/date field 101 and further soft key selection buttons 102.

The operator identify field 97 may include the name of the datacast operator 9 (Figure 1) and a logo. The terminal status area 98 may include information such as network connection status, battery level and incoming call alert. The information may be presented in the form of icons, animated icons or text.

Some of the fields may display data and information which has been received from the datacast service system 6 (Figure 1). Some of the fields may display data and information which has been stored in the storage 82 (Figure 13) and which originates from the datacast service system 6 (Figure 1), the user, the terminal 2, another source, for example via PLMN 10 (Figure 1) or a combination of these.

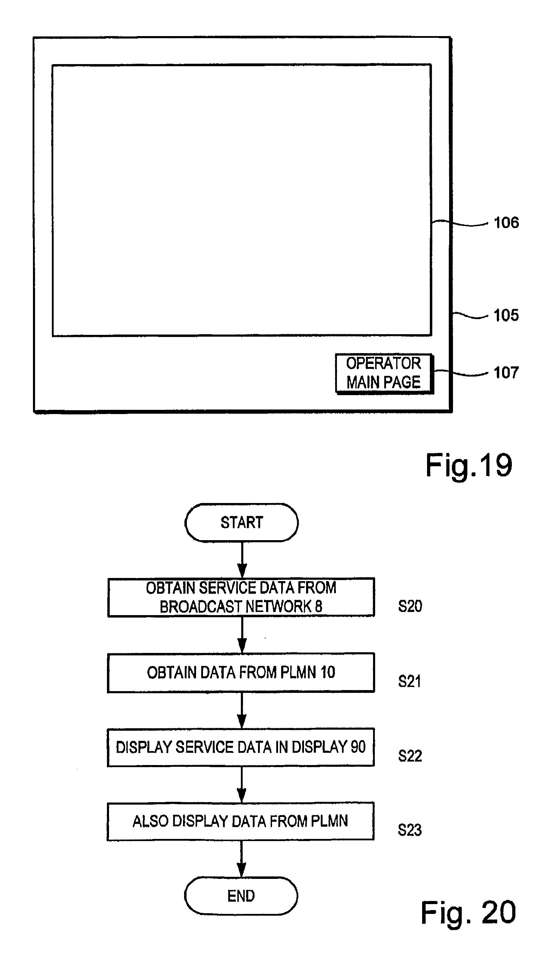

The selection buttons 100 may include a button 100₁ for presenting a viewing history, a button 100₂ for displaying programs which are currently running, a button 100₃ for displaying available channels and a button 100₄ for switching to a viewer 105 (Figure 19) which fills substantially all or most of the display 90.

The DCO main page display 96 is updated to reflect changes in ESG, service popularity etc. It can also be used for informing users of upcoming events, changes in services or service availability. The DCO main page display 96 may also be used for advertising purposes, such as displaying trailers.

In Figure 17, the active area 99 shows a list 103 of available channels.

Referring to Figure 18, a second view of the DCO main page display 96 is shown in which the active area 99 shows a list 104 of programs currently running. The selection buttons 100 may include a button 100₅ for entering an options menu, a button 100₆ for reverting back to the first view shown in Figure 17 and a button 100₇ for obtaining further details.

Referring to Figure 19, a viewer 105 is shown. The viewer 105 includes an active area 106 and a button 107 for reverting to the DCO main page display 96.

As mentioned earlier, the mobile terminal 2 can be used not only to obtain and render content obtained from the broadcast network 8 (Figure 1), but also content and/or data obtained from the PLMN 10 (Figure 1).

Referring to Figure 20, a process performed by the mobile terminal 2 in one embodiment of the invention is shown in the form of a flow diagram.

Referring also to Figures 1, 3 and 13, the controller 79 retrieves at least a part of the service data 23 from the datacast service system 6 via the broadcast network 8 (step S20). Additionally, the controller 79 retrieves data (not shown) from a source (not shown) via the PLMN 10 (step S21). The processor 79 displays service data 23 in the display 90, for example in the DCO main page display 96 (step S22) and also displays data obtained from the PLMN 10 in the display 90.

It will be appreciated that many modifications may be made to the embodiments hereinbefore described. For example, the mobile terminal 2 may take the form of a personal digital assistant (PDA). Furthermore, a fixed or semi-fixed terminal may be used, for example in the form of a set-top box or personal computer.

According to some, but not necessarily all embodiments of the invention, there is provided a method of datacasting, the method comprising providing electronic service guide (ESG) data relating to one or more services and providing supplementary data selectively provided by a datacast operator.

The method may comprise providing a main page including at least some of said supplementary data.

The method may comprise providing one or more data files including information for locating said main page.

One or more data files may include information for locating at least one service main page.

According to some, but not necessarily all embodiments of the invention, there is provided a computer program including instructions which when executed by a data processing apparatus causes said apparatus to perform the method as described above.

According to some, but not necessarily all embodiments of the invention, there is provided a system for datacasting comprising providing electronic service guide (ESG) data relating to one or more services and providing supplementary data selectively provided by a datacast service operator.

According to some, but not necessarily all embodiments of the invention, there is provided apparatus for datacasting comprising means for providing electronic service guide (ESG) data relating to one or more services and means for providing supplementary data selectively provided by a datacast service operator.

According to some, but not necessarily all embodiments of the invention, there is provided apparatus for datacasting comprising a processor configured to provide electronic service guide (ESG) data relating to one or more services and to provide supplementary data selectively provided by a datacast service operator.

According to some, but not necessarily all embodiments of the invention, there is provided a method of operating a terminal for receiving datacast services, the method comprising receiving electronic service guide (ESG) data relating to one or more services and receiving supplementary data provided by a datacast operator.

The method may comprise receiving at least some of said supplementary data in preference to receiving said ESG data.

The method may comprise using said supplementary data to locate said ESG data.

The method may comprise receiving a main page including at least some of said supplementary data.

The method may comprise providing one or more data files including information for locating said main page.

Said one or more data files may include information for locating at least one service main page.

The method may further comprise receiving datacast data via a first network, receiving data from a second, different network and displaying at least some of said datacast data and at least some of said data.

The method may comprise displaying a list of services and selecting one or more services.

The method may comprise intermittently switching on a receiver to receive one or more time-sliced bursts of data and switching off said receiver.

According to some, but not necessarily all embodiments of the invention, there is provided a computer program including instructions which when executed by a data processing apparatus causes said apparatus to perform the method as described above.

According to some, but not necessarily all embodiments of the invention, there is provided a system for operating a terminal for receiving datacast services, the system comprising receiving electronic service guide (ESG) data relating to one or more services and receiving supplementary data provided by a datacast operator.

According to some, but not necessarily all embodiments of the invention, there is provided a terminal for receiving datacast services comprising means for receiving electronic service guide (ESG) data relating to one or more services and means for receiving supplementary data provided by a datacast operator.

The terminal may comprise means for receiving datacast transmissions and means for communicating with public land mobile network.

## Claims

1. A method of datacasting, the method comprising:
providing electronic service guide data (24) relating to one or more services which is specific to a datacast service system (6) and selectively provided by a datacast operator (9); and
providing one or more data files (47) including information for locating a main page (36) of the datacast operator (9).

2. A method according to claim 1, wherein the main page (36) of the datacast operator (9) includes at least some of supplementary data (23).

3. A method according to claim 1, wherein the main page (36) is the first page which is presented to the user when the datacast service system (6) is accessed.

4. A method according to claim 1, wherein providing the one or more data files further comprises:
downloading an internet protocol notification table (INT);
obtaining an address of a hierarchy file from the internet protocol notification table;
downloading the hierarchy file; and
obtaining addresses of main pages from the hierarchy file, said main pages including a main page for the datacast operator.

5. A method according to claim 1, wherein said one or more data files (48) include information for locating at least one service main page (39).
